# Europäisches Patentamt
# European Patent Office
# Office européen des brevets

(19)

(11) Publication number: **0 015 106**
**B1**

(12)

# EUROPEAN PATENT SPECIFICATION

(45) Date of publication of patent specification: **02.03.83**

(21) Application number: **80300379.7**

(22) Date of filing: **08.02.80**

(51) Int. Cl.³: **C 01 B 3/00, B 01 J 19/04, F 17 C 11/00**

(54) Absorption-desorption system.

(30) Priority: **12.02.79 US 11194**

(43) Date of publication of application:
**03.09.80 Bulletin 80/18**

(45) Publication of the grant of the patent:
**02.03.83 Bulletin 83/9**

(84) Designated Contracting States:
**BE CH DE FR GB IT NL SE**

(56) References cited:
**GB - A - 1 090 479**
**GB - A - 1 153 086**
**GB - A - 1 509 184**
**US - A - 3 479 165**
**US - A - 4 016 836**

**Patents Abstracts of Japan, Vol. 1, No. 65, 24 June 1977 page 976M77.**

(73) Proprietor: **MPD Technology Limited**
**Thames House Millbank**
**London SW1P 4QF (GB)**

(72) Inventor: **Sandrock, Gary Dale**
**113 Kraft Place**
**Ringwood Passaic County, New Jersey (US)**
Inventor: **Snape, Edwin**
**14 Linda Drive Rockland County**
**Suffern, New York 10901 (US)**

(74) Representative: **Lockwood, Barbara Ann et al,**
**Thames House (Fifth Floor) Millbank**
**London SW1P 4QF (GB)**

Courier Press, Leamington Spa, England.

## Absorption-desorption system

The present invention relates to systems in which a material, normally a gas, is sequentially absorbed and desorbed from a sorbent material.

In systems to which the invention relates, and in particular to devices in which hydrogen is absorbed by and desorbed from a hydridable material, the absorption is an exothermic reaction and the desorption is endothermic.

Numerous prior art specifications disclose methods by which the temperature of the sorbent material is controlled. For example U.S. Patent US—A—3 479 165 discloses the use of magnesium hydride for the storage of hydrogen, located in a container having an integrally fitted thermally insulated jacket in order to prevent heat loss. Japanese patent publication JP—A—52 14211 discloses a hydrogen gas pressure container which is located in a water tank for either warming or cooling the container. In other examples sophisticated and exensive engineering techniques are used in order to remove the heat generated during the exothermic absorption reaction away from the region of the reaction, and to provide heat from an external source during the endothermic desorption reaction. For example GB—A—1 090 479 discloses the supply of heat during the desorption by use of a thermostatically controlled heater and US—A—4 016 836 discloses a hydride fuel system in which heat from the combustion of the hydrogen fuel is used to heat hydride material during the desorption and a coolant is circulated around the hydride to cool it during the exothermic desorption stage.

The present invention is based upon the simple discovery that a self-contained system can be designed in which the exothermic heat of sorption is used during the endothermic desorption reaction.

According to the present invention the absorbing medium is located in heat transfer connection with a heat storage medium and a heat transfer barrier is located external to the absorbing medium and heat storage medium such that the heat produced during the exothermic absorption of an absorbable material by the absorbing medium is stored by the heat storage medium and is supplied to the absorbing medium during the endothermic desorption of the material from the absorbing medium.

Thus the system of the present invention may be entirely self contained in as far as no external sources of heat or of cooling are essential. Alternatively, some means for introducing further heat from the absorbing medium or for removing heat through the heat transfer barrier could be present, but such means are only useful when ambient external temperatures are likely to be far removed from the designed for ambient external temperature.

Preferred systems of the present invention are those in which hydrogen is absorbed by and desorbed from hydridable materials, and which may be used for example in the separation hydrogen from a mixture of gases. In such a process hydrogen would be selectively absorbed on the hydride-forming absorbant during the absorption stage and would be desorbed in substantially pure form from the hydride in the desorption stage.

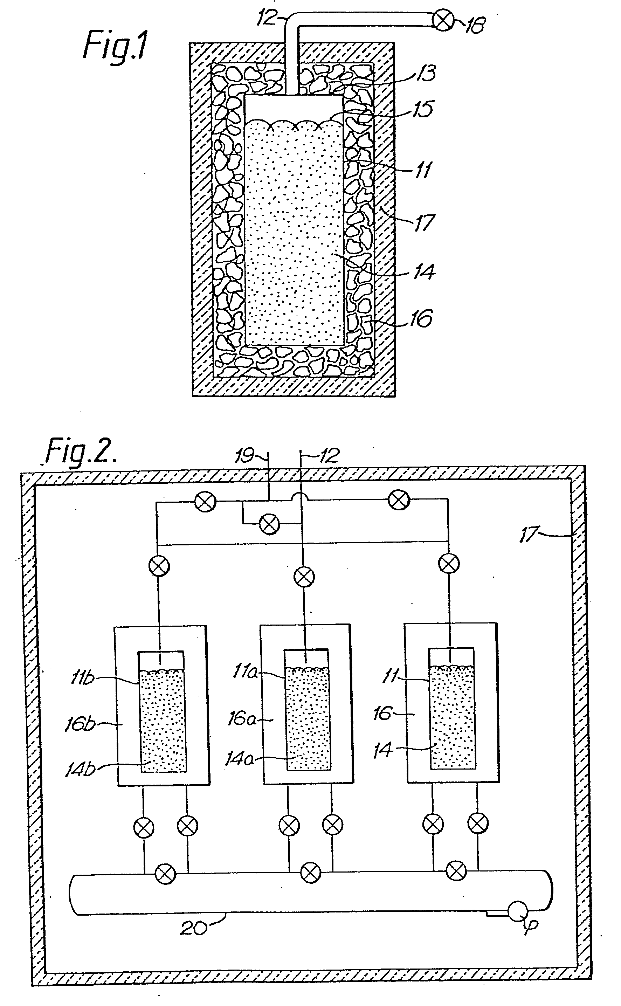

Two embodiments of the invention are illustrated in the accompanying drawings in which Figure 1 is a diagrammatic representation of a hydride tank of the present invention and Figure 2 shows schematically a hydride system. Figure 1 shows a container 11 consisting of a pressure resistant bottle having hydrogen gas line 12 entering through top 13 of the bottle. The container 11 contains hydridable metal 14 and filter 15 which prevents transfer of solid hydridable material or the hydride into hydrogen gas line 12. In operation, hydrogen is forced under pressure through line 12 into container 11 where it combines with hydridable metal 14 to form a metal hydride. This hydriding reaction releases heat which passes to heat storage medium 16 positioned between container 11 and heat transfer barrier 17. When one wishes to desorb hydrogen from the hydrided metal 14, valve 18 in hydride gas line 12 is opened and heat stored in heat storage medium 16 provides the heat necessary to maintain the endothermic desorption reaction at a reasonable rate. Heat transfer barrier 17 minimises transfer of stored heat to any point exterior of the container 11 and heat storage medium.

In the device shown in Figure 1 it is usual to have hydrogen available for storage at or about some specified pressure. Any sorbent material will have a theoretical maximum capacity and an ascertainable total heat of reaction for capacity storage. In addition, it will possess an equilibrium absorbing pressure which rises with temperature. In order to operate the system of the present invention it is necessary that sufficient heat storage capacity be available with respect to the quantity of sorbent material that the equilibrium absorbing pressure will not reach the supply pressure of hydrogen until at least about 60% of the storage capacity of the sorbent material is utilized. Advantageously, heat storage capacity will be sufficient to absorb theoretical maximum heat of reaction of absorption without the equilibrium absorption pressure exceeding the supply pressure of hydrogen gas.

Figure 2 shows schematically a plurality of containers 11, 11a, 11b associated with heat storage means 16, 16a, 16b and sorbent masses 14, 14a, 14b. Appropriate valving in hydrogen charging line 12 and discharging line 19 enables alternate, sequential or simultaneous charging or discharging of hydrogen

from containers 11, 11a, 11b. Similarly valving-piping circulating system 20 enables transfer of heat storage media (usually fluid, example liquid, or possibly granular solid) to that one or more of containers 11, 11a, 11b which at any given time requires heat transfer capacity. Schematically, the heat transfer barrier 17 is depicted in Figure 2 as surrounding the entire grouping of containers. In practice, it is more likely that each unit of heat storage medium/container will be insulated, as well as, the piping and valving circulating system connecting the units.

The heat storage medium can consist of a simple sensible heat absorber or can involve a phase change. Preferred sensible heat absorbers consist of materials of relatively high heat capacity and low cost, for example liquid, water or rock. Examples of phase change heat storage media include ice/water, Glauber's salt and water/steam. A further alternative heat storage medium for use in the present invention can consist of a combination of sensible heat storage plus phase change storage using either a single phase or a mixed phase material.

The two embodiments of the invention illustrated in Figures 1 and 2 show the heat storage medium external of the containers 11. However this is not essential since some or all of the heat storage medium can be within the containers. Thus it is contemplated that solid bodies, rock, metal, metal powder or other sensible heat storage media which are non-reactive with the hydride or hydridable material inside the container can be located inside the container and further heat storage medium, preferably latent heat storage or phase change heat storage medium is located external to the container. It is of course also possible that phase change heat storage material can be encapsulated in a non-reactive material and located inside the container.

In calculating total heat absorption ability of the system one should consider:

A—heat absorption ability of the sorbent (sorbent hydride)=$M_1 Cp_1$,

B—heat absorption ability of the container=$M_2 Cp_2$,

C—heat absorption ability of the sensible heat storage means=$M_3 Cp_3$,

D—heat absorption ability of the phase change storage medium below the phase change temperature=$M_4 Cp_4$,

E—heat absorption ability of the phase change storage medium above the phase change temperature=$M_4 Cp_5$, and

F—heat of the phase change $M_4 \Delta H$, where

$M_1$= average mass of hydridable material — hydride of such material

$CP_1$=average heat capacity of the material — material hydride

$M_2$= mass of the container

$Cp_2$=heat capacity of the container

$M_3$= mass of latent heat storage material

$Cp_3$=heat capacity of sensible heat storage material

$M_4$= mass of phase change material

$Cp_4$=heat capacity of phase change material below the phase change

$Cp_5$=heat capacity of phase change material above the phase change

$\Delta H$= heat of phase change

In determining the mass of heat storage material required for any situation, generally one can initially determine the amount of heat theoretically generated by hydriding the available hydride storage material. At least about 60% of this generated heat must be stored without the temperature rising from initial temperature $T_1$ to the absorption pressure equilibrium temperature $T_2$ at which the absorption pressure equals the hydrogen supply pressures. If a phase change material which changes phase in the range of $T_1$ to $T_2$ is available, the heat of phase change of the available mass of this material is calculated and subtracted from 60% of the heat of hydriding reaction. This leaves the amount of heat which must be stored in the other parts of the system such as the storage medium, container and hydrided alloy over a temperature increment of $T_2$ minus $T_1$. Subtraction of all heat storage capabilities over this temperature increment except that of the storage medium leaves a figure from which the mass of sensible heat storage medium can be obtained by dividing by the temperature increment and the heat capacity of the storage medium. It is to be noted that while the minimum mass of heat storage medium (either sensible or phase change material) can be claculated in this fashion it is highly advantageous to use more mass of heat storage material than the minimum and to calculate $\Delta T$ on a conservative basis so that when maximum hydriding reaction occurs there still remains a $\Delta P$ with respect to the hydrogen source pressure as compared to the equilibrium hydrogen pressure of hydriding.

Preferred hydrogen storage materials for use in the present invention consist of the HY-STOR alloys sold by MPD Technology Limited of Wiggin Street, Birmingham, England such as the alloys having the chemical formulae FeTi, $(Fe_{0.9}Mn_{0.1})Ti$, $(Fe_{0.8}Ni_{0.2})Ti$, $CaNi_5$ $(Ca_{0.7}M_{0.3})Ni_5$, $(Ca_{0.2}M_{0.8})Ni_5$, $MNi_5$ $LaNi_5$, $(CFM)Ni_5$, $LaNi_{4.7}Al_{0.3}$, $MNi_{4.5}Al_{0.5}$, $Mg_2Ni$ and $Mg_2Cu$ (M=mischmetal and CFM=cerium free mischmetal). Other reversible hydride-forming materials, either metals or non-metals, can also be used in the systems of the present invention.

Materials useful for isothermal heat storage owing to a phase change can be readily selected from standard reference sources such as the Temperature, Pressure, Heat and Entropy Change of Transition, Fusion and Vaporization Table in American Institute of Physics Handbook 2nd Ed. McGraw Hill Book Company

1963. For example, $MgCl_2 \cdot 6H_2O$ fusing at about 350 K with a $\Delta H$ of 34.3 KJ/mole, Rochelle salt fusing at about 350 K, Glauber's salt fusing at about 305 K and water fusing at about 273 K are examples of phase changes at temperatures at which some hydridable materials will absorb hydrogen under reasonable pressure. Sensible heat storage materials are usually the cheapest, such as liquid water or rock. Any table of specific heats will show however that relatively cheap solids such as hydrated calcium sulphate, Epsom salts, alum and hydrated sodium thiosulphate possess heat capacities which are generally higher than those of rock.

Some examples will now be described.

Examples

In order to demonstrate the advantages given by the present invention the discharge characteristics of a hydride tank were determined in three conditions (a) using no heat storage, (b) using sensible heat storage in the form of water and (c) using phase change heat storage in the form of melted sodium sulphate decahydrate.

The same hydride and container was used for each test and each was treated in the same way. The container was a 5 cm O.D. stainless steel cylinder containing 1.97 kg of powdered $Ca_{0.7}M_{0.3}Ni_5$, where M is mischmetal. Fully charged to about 2167 $kN/m^2$ absolute $H_2$ pressure under equilibrium conditions, this amount of hydride has a storage capacity of about 240 standard litres of hydrogen. Before starting each test the tank was discharged to about 101.3 $kN/m^2$ absolute at room temperature. The heat storage medium (if used) was also equilibrated at room temperature. Each example then consisted of the following procedure:

1. A rapid charge at 2167 $kN/m^2$ absolute applied $H_2$ pressure for 15 minutes.
2. A storage period of one hour during which no $H_2$ was admitted to the cylinder.
3. A discharge period starting at an initial outflow of 3.0 standard litres/minute, maintaining this outflow as long as possible, after which the maximum flow rate was monitored as a function of time. Pressure was also monitored as a function of time during the entire discharge. The longer the full 3.0 std. l/min. outflow could be maintained the better was the performance of the tank.

It should be understood that specific conditions chosen above are arbitrary and serve simply to illustrate the relative advantages of the invention.

A. Free tank (no heat storage)

During charging, the tank supported in air became very hot (too hot to comfortably touch). During charging, and especially during the one hour hold period, much of this heat was lost to the ambient surroundings as the tank cooled. During the discharge steps, the 3.0 l/min. discharge rate could be sustained for only 14.5 minutes at which time the tank had become cold and the pressure had dropped to almost 0 $kN/m^2$. The flow rate then dropped rapidly to less than 0.5 l/min., that low flow rate being determined mostly by the rate at which heat from the ambient air could enter the tank and provide the heat of dissociation, a relatively slow process.

B. Sensible heat storage

For the second test, the cylinder was placed in a 13 cm I.D. glass tank with 4.0 litres (4.0 kg) of water. The glass tank was surrounded by 2.0 cm thick styrofoam insulation to maintain near-adiabatic conditions. The water was stirred during the test to maintain temperature uniformity. Before charging was started the water temperature was 22.4°C. After the 15 minute charge period the water temperature had risen to 34.5°C, representing a stored reaction energy of about 202.6 kJ, about what would be expected from the amount of $H_2$ absorbed and the 27.2 kJ/mol $H_2$ heat of reaction of this hydride. After the one hour hold period the temperature was still 34.1°C, i.e., the reaction heat was still almost fully stored in the warm water. During discharge 48.5 minutes of 3.0 l/min sustained flow was obtained compared to only 14.5 for the tank with no heat storage. This demonstrates the dramatic advantage of the reaction heat storage concept.

C. Latent heat storage

The third test used the melting of sodium sulphate decahydrate $(Na_2SO_4 \cdot 10H_2O)$ for reaction heat storage. $Na_2SO_4 \cdot 10H_2O$, with an effective heat of fusion of about 242.8 kJ/kg, has been used as a latent heat medium for solar heat storage. For our purposes the hydride tank described above (in the discharged condition) was suspended in a 7.5 cm I.D. glass cylinder into which was poured 2.1 kg of $Na_2SO_4 \cdot 10H_2O$ which was then allowed to equilibrate at room temperature (22.4°C). Actually only about 1 kg of salt was needed but the geometry of the available tube was such that excess salt was needed to fill the void space in the bottom of the tube. This latter material, for all practical purposes, did not take part in the experiment. For insulation purposes, the glass tube (containing the tank and heat storage salt) was surrounded by an approximately 5 cm thick layer of vermiculite.

The tank, in the configuration described above, was given the same charge (15 min at 2167 $kN/m^2$ absolute), hold (1 hour), and discharge (3.0 std l/min) sequence as experiments A and B above. During charging, the heat generated melted the salt in the vicinity of the tank. The stored latent heat of fusion was very useful in supplying the endothermic heat of dissociation. During discharge salt was observed to solidify on the surface of the tank, a clear indication the latent heat of salt solidification was entering the tank as described.

Discharge using latent heat storage, is comparable to discharge which used sensible heat ($H_2O$) storage. The discharge rate of 3.0 std l/min was maintained about 46 minutes using latent heat storage. The relative advantage of the latent heat storage is that less mass and volume is required than for sensible heat storage. The disadvantage of molten salt storage. is higher cost and certain cycling problems that might occur. It is well known from solar energy research that $Na_2SO_4 . 10H_2O$, for example, does show undesirable supercooling and degradation effects after a number of cycles.

## Claims

1. An absorption-desorption system comprising a container (11), surrounded by a heat transfer barrier (17), in which container is located an absorption medium (14) which is capable of exothermic absorption and endothermic desorption of a material, characterised in that inside the heat transfer barrier (17) a heat storage medium (16) is in heat transfer connection with the absorbing medium (14) whereby heat produced during absorption of the material is stored in the heat storage medium (16) and is used to supply heat for the subsequent desorption of the material from the absorbing medium (14).

2. A system as claimed in claim 1 in which the absorbing medium (14) is a hydridable material and the absorbable material is hydrogen.

3. A system as claimed in claim 2 in which the hydridable material is a metallic hydride.

4. A system as claimed in any preceding claim in which the heat storage medium (14) is external to the container (11).

5. A system as claimed in any preceding claim in which at least part of the heat storage medium (14) is internal of the container (11).

6. A system as claimed in any preceding claim in which the heat storage medium (14) is a sensible heat storage medium.

7. A system as claimed in any one of claims 1 to 5 in which the heat storage medium (14) is a latent heat storage medium.

8. A system as claimed in any preceding claim in which the container (11) includes a conduit (12) through which gaseous absorbable material can be fed into the container at a specified feed gas pressure.

9. A system as claimed in claim 8 in which the mass of the container (11), the absorbing medium (14) and the heat storage medium (16) is sufficient to absorb at least 60% of the heat generated by absorbing the maximum capacity of the absorbable material in the absorbing medium (14) without the temperature of the absorbing medium (14) rising to a temperature at which the absorbing medium will have an equilibrium absorbable material pressure equal to the specified feed gas pressure.

## Patentansprüche

1. Absorptions-Desorptions-Anlage aus einem Behälter (11), umgeben von einer Wärmeüberführungsbarrriere (17), in dem sich ein absorbierendes Medium (14) befindet, das exothermischer Absorption und endothermischer Desorption eines Materials fähig ist, dadurch gekennzeichnet, daß sich im Inneren der Wärmeüberführungsbarriere (17) ein Wärmespeichermedium (16) in Wärmeübertragungsverbindung mit dem absorbierenden Medium (14) befindet, so daß die während der Absorption des Materials erzeugte Wärme in Wärmespeichermedium (16) gespeichert und anschließend zur Desorption des Materials aus dem absorbierenden Medium (14) verwendet wird.

2. Anlage nach Anspruch 1, dadurch gekennzeichnet, daß das absorbierende Medium (14) ein hydridierbares Material und das absorbierbare Material Wasserstoff ist.

3. Anlage nach Anspruch 2, dadurch gekennzeichnet, daß daß hydridierbare Material ein metallisches Hydrid ist.

4. Anlage nach einem der vorhergehenden Ansprüche, dadurch gekennzeichnet, daß das Wärmespeichermedium (14) sich außerhalb des Behälters (11) befindet.

5. Anlage nach einem der vorhergehenden Ansprüche, dadurch gekennzeichnet, daß sich zumindest ein Teil des Wärmespeichermediums (14) im Inneren des Behälters (11) befindet.

6. Anlage nach einem der vorhergehenden Ansprüche, dadurch gekennzeichnet, daß das Wärmespeichermedium (14) ein fühlbares Wärmespeichermedium ist.

7. Anlage nach einem der Ansprüche 1 bis 5, dadurch gekennzeichnet, daß das Wärmespeichermedium (14) ein latentes Wärmespeichermedium ist.

8. Anlage nach einem der vorhergehenden Ansprüche, dadurch gekennzeichnet, daß der Behälter (11) eine Leitung (12) hat, durch die gasförmiges absorbierbares Material unter einem bestimmten Gasförderdruck in den Behälter eingespeist werden kann.

9. Anlage nach Anspruch 8, dadurch gekennzeichnet, daß die Masse des Behälters (11), des absorbierenden Mediums (14) und des Wärmespeichermediums (16) ausreicht, um mindestens 60% der beim Absorbieren der maximalen Menge des absorbierbaren Materials im absorbierenden Medium (14) erzeugten Wärme zu absorbieren, ohne daß dabei die Temperatur des absorbierenden Mediums (14) auf eine Temperatur steigt, bei der das absorbierende Medium einen Gleichgewichtsabsorbiermaterialdruck hat, der dem festgelegten Gasförderdruck entspricht.

**Revendications**

1. Un système d'absorption-désorption comprenant un récipient (11), entouré par une barrière au transfert de chaleur (17), récipient dans lequel se trouve un milieu absorbant (14) qui est capable d'absorption exothermique et de désorption endothermique d'une matière, caractérisé en ce qu'à l'intérieur de la barrière au transfert de chaleur (17), un milieu de stockage de chaleur (16) est en relation de transfert de chaleur avec le milieu absorbant (14) de manière que la chaleur produit durant l'absorption de la matière soit emmagasinée dans le milieu de stockage de chaleur (16) et soit utilisée afin de fournir de la chaleur pour la désorption ultérieure de la matière du milieu absorbant (14).

2. Un système selon la revendication 1, dans lequel le milieu absorbant (14) est une matière formatrice d'hydrure et la matière absorbable est de l'hydrogène.

3. Un système selon la revendication 2, dans lequel la matière formatrice d'hydrure est un hydrure métallique.

4. Un système selon l'une quelconque des revendications précédentes, dans lequel le milieu de stockage de chaleur (14) se trouve à l'extérieur du récipient (11).

5. Un système selon l'une quelconque des revendications précédentes, dans lequel au moins une partie du milieu de stockage de chaleur (14) se trouve à l'intérieur du récipient (11).

6. Un système selon l'une quelconque des revendications précédentes, dans lequel le milieu de stockage de chaleur (14) est un milieu de stockage de chaleur sensible.

7. Un système selon l'une quelconque des revendications 1 à 5, dans lequel le milieu de stockage de chaleur (14) est un milieu de stockage de chaleur latente.

8. Un système selon l'une quelconque des revendications précédentes, dans lequel le récipient (11) comprend un conduit (12) par lequel une matière absorbable gazeuse peut être introduite dans le récipient à une pression spécifiée du gaz d'alimentation.

9. Un système selon la revendication 8, dans lequel la masse du récipient (11), du milieu absorbant (14) et du milieu de stockage de chaleur (16) est suffisante pour absorber au moins 60% de la chaleur produite par l'absorption de la capacité maximale de la matière absorbable dans le milieu absorbant (14) sans que la température du milieu absorbant (14) monte à une température à laquelle le milieu absorbant aura une pression de matière absorbable d'équilibre égale à la pression spécifiée du gaz d'alimentation.

Fig.1

Fig.2.